# EUROPÄISCHE PATENTSCHRIFT

(11) **EP 0 679 272 B1**
(45) Veröffentlichungstag und Bekanntmachung des Hinweises auf die Patenterteilung: **01.04.1998**
(21) Anmeldenummer: 94905080.1
(22) Anmeldetag: 18.01.1994
(51) Int. Cl.: G06F 9/44

(54) **PROGRAMMIERSPRACHENSYSTEM ZUR ERZEUGUNG EINES PROGRAMMSYSTEMS EINES REALZEITSYSTEMS AUF HOCHSPRACHENNIVEAU**
HIGH-ORDER PROGRAMMING LANGUAGE SYSTEM FOR GENERATING A PROGRAMMING SYSTEM OF A REAL TIME SYSTEM
SYSTEME DE LANGAGES DE PROGRAMMATION PERMETTANT DE PRODUIRE UN SYSTEME DE PROGRAMME D'UN SYSTEME EN TEMPS REEL EN LANGAGE EVOLUE

(30) Priorität: 18.01.1993 DE 9300562 U
(43) Veröffentlichungstag der Anmeldung: 02.11.1995
(73) Patentinhaber: SIEMENS AKTIENGESELLSCHAFT, 80333 München (DE)
(72) Erfinder: DÖLLINGER, Carl-Heinz, D-82110 Germering (DE); HAMMERSCHICK, Andreas, D-80689 München (DE); WOLLENSAK, Martin, D-81371 München (DE)
(86) Internationale Anmeldenummer: EP9400116
(87) Internationale Veröffentlichungsnummer: WO9416386

(56) Entgegenhaltungen:
- TWELFTH ANNUAL INTERNATIONAL PHOENIX CONFERENCE ON COMPUTERS AND COMMUNICATION, 23. März 1993 , TEMPE, ARIZONA, US, Seiten 495 - 501 XP370521 KEI YUASA ET AL.: 'Network programming support with object oriented paradigm'
- XIV INTERNATIONAL SWITCHING SYMPOSIUM ISS'92, Bd. 2 , Oktober 1992 , YOKOHAMA, JP, Seiten 204 - 208 XP337719 JÜRGEN F.H. WINKLER ET AL.: 'Object CHILL - An Object Oriented Language for Telecom Applications'
- IEEE COMMUNICATIONS MAGAZINE, Bd. 29, Nr. 1 , Januar 1991 , PISCATAWAY, NJ, US, Seiten 60 - 68 KATSUMI MARUYAMA ET AL.: 'A Concurrent Object-Oriented Switching Program in Chill'

## Beschreibung

Aus D1 (XIV INTERNATIONAL SWITCHING SYMPOSIUM ISS `92, Bd.2, Oktober 1992, YOKOHAMA, JP, Seiten 204-208, JÜRGEN F.H. Winkler ET AL.: `Objekt CHILL - An Object Oriented Language for Telecom Applications) ist ein (objektorientiertes) Programmiersprachensystem, namens CHILL, zur Erzeugung von Programmsystemen für Vermittlungssysteme bekannt. Die Kommunikation zwischen Programmkomponenten erfolgt in D1 durch den Austausch von Botschaften (message passing).

Ein Programmsystem zur Steuerung eines Realzeitsystems, insbesondere eines Vermittlungssystems sollte einen Kommunikationsmechanismus beinhalten, der eine flexible, lose verbundene Verteilung der Funktionen auf die verschiedenen Prozessoren des Realzeitsystems zuläßt. Hierzu ist ein Kommunikationsmechanismus erforderlich, der es ermöglicht, zwei parallel ablaufende Programme (Client und Server) zur Kommunikation ohne Angabe des Ortes miteinander zu verbinden.

Der Erfindung liegt die Aufgabe zugrunde, ein Programmiersprachensystem auf Hochsprachenniveau derart auszugestalten, daß eine sichere und rein logische Programmierung des genannten Kommunikationsmechanismus ermöglicht wird.

Diese Aufgabe wird durch die Merkmale des Anspruchs 1 gelöst.

Durch die Einführung des neuen Datentyps, des sogenannten Diensttyps innerhalb des Programmiersprachensystems adressiert der Anwenderprogrammierer seine Kommunikationspartner auf rein logischem Niveau. Die Kenntnis von derartigen Adressen, wie Prozessornummer oder Bufferadresse ist für ihn somit nicht mehr nötig.

Aufgrund des statischen Initialisierens der Instanzen des Diensttyps wird die spätere dynamische Initialisierung des Realzeitsystems verkürzt.

Im Falle des statischen Bekanntmachens der Dienstinstanzen gegenüber dem Betriebssystem ist für das dynamsiche Einrichten einer Verbindung zu einem Dienst jeweils nur eine einzige Verbindungsanweisung zum Anfordern einer Dienstinstanz erforderlich.

Verbindungsanweisung zum Anfordern einer Dienstinstanz erforderlich.

Aufgrund der neuen Sprachmittel kann der Compiler bereits zum Entwicklungszeitpunkt die Einhaltung der folgenden Konventionen überprüfen:
a) Ein Zugriff auf einen Diensttyp ist nur mit einer fest definierten Builtin-Prozedur (Verbindungsanweisung an das Betriebssystem) möglich.
b) Der Datentyp zwischen Kommunikationspfad und Diensttyp muß kompatibel sein.

Eine weitere Ausführungsform der Erfindung ist durch Anspruch 2 angegeben. Diese Ausführungsform ermöglicht es dem Anwender, eine in einer Verbindungsanweisung angeforderte Dienstinstanz in eindeutiger Weise anzugeben. Das Betriebssystem hat bei einer derartigen Verbindungsanweisung keine Auswahlmöglichkeit zwischen verschiedenen Dienstinstanzen.

Eine weitere Ausführungsform der Erfindung ist durch Anspruch 3 angegeben. Durch die statische Belegung des Partizipionsfeldes wird bei dieser Ausführungsform der Erfindung die Initialisierung des mit Hilfe des Programmiersprachensystem erzeugten Programmsystems beim Hochfahren des zugehörigen Realzeitsystems verkürzt.

Eine weitere Ausführungsform der Erfindung ist durch Anspruch 4 angegeben. Die dynamische Belegung des Partizipiensteiles ermöglicht bei dieser Ausführungsform der Erfindung eine spätere Veränderbarkeit des Partizipionsfeldes und damit eine größere Flexibilität bezüglich sich später verändernden Bedingungen. Beispielsweise kann ein bestimmter Mengenbereich zu einem späteren Zeitpunkt eine größere Kapazität an Dienstleistung benötigen.

Eine weitere Ausführungsform der Erfindung ist durch Anspruch 5 angegeben. Durch das Versionskennzeichen wird es ermöglicht, den über Meldungen abgewickelten Kommunikationsverkehr der Software während des Betriebs des Realzeitsystems auf eine neu eingebrachte Software umzuleiten und somit einen Software-Austausch während des Betriebs durchzuführen. Diese Umleitung wird erreicht, indem diejenigen Module, die von dem Software-Tausch berührt sind, beim Aufbau einer Kommunikationsbeziehung zu einem Server-Modul in ihrer Anforderung das neue Versionskenzeichen angeben müssen, und dadurch das Betriebssystem die Dienstinstanz des neuen Server-Moduls auswählt.

Eine weitere Ausführungsform der Erfindung ist durch Anspruch 6 angegeben. Diese Ausführungsform ermöglicht es dem Anwender durch die Aufnahme eines Systemzustandsfeldes in einen Diensttyp, zu bewirken, daß dieser Dienst vom Realzeitsystem auch im Falle besonderer Systemzustände ausgeführt wird.

Eine weitere Ausführungsform der Erfindung ist durch Anspruch 7 angegeben. Durch das Dienstleistungsmodul wird sichergestellt, daß über die Grenze eines Dienstleistungsmoauls hinaus ausschließlich nur Dienstschnittstellen exportiert werden, was durch den Compiler bereits zum Entwicklungszeitpunkt nachprüfbar ist. Dies bedeutet, daß eine Kommunikation zwischen Diensten unterschiedlicher Dienstleistungsmodule ausschließlich durch Meldungen und damit nicht durch Mechanismen mit gemeinsamen Daten erfolgen kann.

Das Dienstleistungsmodul stellt somit eine Software-Einheit dar, die die entscheidende Voraussetzung für die Austauschbarkeit während des Betriebs des Realzeitsystems erfüllt, nämlich die Bedingung des ausschließlichen Kommunikationsverkehrs über Meldungen.

Eine weitere Ausführungsform der Erfindung ist durch Anspruch 8 angegeben. Durch diese Ausführungsform wird gewährleistet, daß im Falle eines lokalen Remote-Prozedur-Aufrufs die Kommunikation mit der zugehörigen Remote-Prozedur nicht über eine Meldung, d.h. über das Betriebssystem, sondern über einen lokalen Prozedur-Aufruf durchgeführt wird, was die Dynamik entsprechend verbessert.

Im folgenden wird ein Ausführungsbeispiel der Erfindung anhand der Zeichnung näher erläutert.

Figur 1 zeigt ein Schalenmodell für Verarbeitungsplattformen eines verteilten Steuerungssystems, das mithilfe des erfindungsgemäßen Programmiersprachensystems realisiert ist.

Figur 2 zeigt die zweifache Anlage von Speicherplatz für eine Service-Variable(Dienstinstanz) im Datenmodul der Server-SPU.

Figur 3 zeigt die Besetzung des Speichers für die Variable comm_path im Datenmodul der Client-SPU.

Figur 4 zeigt die Struktur eines Programmier-Beispiels zur Realisierung einer ortsunabhängigen Kommunikation.

Ein verteiltes System, z.B. ein Vermittlungssystem, soll einen Kommunikationsmechanismus beinhalten, durch den zwei parallel ablaufende Programme (Client and Server) zur Kommunikation ohne Angabe des Ortes miteinander verbunden werden können. Um diese Verbindung auf Hochprachenebene programmieren zu können, werden erfindungsgemäß neue sprachdefinierte Objekte in CHILL eingeführt, die eine location- und replication-transparente Adressierung ermöglichen.

Der genannte Kommunikationsmechanismus wird im folgenden auch als "Service Adressing" bezeichnet.

Die gesamte Software wird in Container untergliedert, nämlich in Kapseln, Dienstleistungsmodule und Elementarmodule.

Die Kapsel ist ein geschlossener Adressraum und bildet den Container für zentrale Resourcen wie Heap und Timer. Der Inhalt einer Kapsel wird durch die Angabe der Diensleistungsmodule definiert.

Das Dienstleistungsmodul ist der Verbund funktional zusammen gehöriger Elementarmodule, die dem Gesamtsystem einen oder mehrere Dienste(Services) zur Verfügung stellen. Das Dienstleistungsmodul kann offline in jede beliebige Kapsel eingebettet werden.

Ein Elementarmodul beinhaltet alle Daten und Prozeduren, die zur Implementierung eines Dienstes notwendig sind.

Das Dienstleistungsmodul ist auf Designebene deklariert und dient dazu, die Software relozierbar aufbauen zu können. Dies bedeutet im wesentlichen, daß Schnittstellen zwischen Dienstleistungsmodulen nur dynamisch aufgebaut werden dürfen und nur Kommunikationsfacilities aktiviert werden dürfen, d.h. keine direkten Datenzugriffe und Prozeduraufrufe möglich sind.

Der Anwender deklariert im Server-Dienstleistungsmodul Diensttypen, die ein abstrakter Datenmode sind, die aus einer Mengen von Schnittstellenobjekten wie Buffer und Remote Prozeduren bestehen und die syntaktisch die Schnittstellen eines Dienstes bedeuten.

Um enhancement- und location-transparency zu unterstützen, werden die Objekte und Regeln für eine Kommunikation in einem verteilten System einer übergeordneten Instanz zugeordnet. Aus diesem Grund werden die Objekte, die zum Aufbau einer Kommunikation in die Sprache CHILL eingebettet. Der Compiler stellt Strukturen zur Verfügung, um diese neuen Objekte in CHILL definieren zu können und überprüft die Einhaltung der Anwendungsregeln. Es existieren Regeln für den Aufbau und nach dem Aufbau eines Kommunikationspfades.

Die Objekte zum Aufbau eines Kommunikationspfades heißen im neuen CHILL "Dienste"(Services). Diese Services enthalten UBIs von Buffern für asynchrone Kommunikation und Remote Prozeduren für synchrone Kommunikation (siehe spätere CHILL-Sprachbeschreibung).

Durch die Einbettung in das Sprachsystem entsteht eine Tabelle(Globale Service-Tabelle)über alle Services im System. Für jeden Service wird vom Systembauer(Konfigurationssystem) eine eineindeutige Nummer(Service Identifier) vergeben, die später online als Index verwendet wird.

Durch die angegebenen Mittel ergeben sich folgende Vorteile:
1.Der Compiler kann bereits zum Entwicklungszeitpunkt die Einhaltung der folgenden Konventionen überprüfen:
   a)Als Kommunikationsschnittstellen dürfen nur Services exportiert und importiert werden.
   b)Die Zugriffe auf Services ist nur mit festdefinierten Builtin-Prozeduren möglich.
   c)Die Modekompatibilität zwischen Kommunikationspfad und Service wird ebenfalls überprüft.
   d)Beim Aktivieren des Services wird vom Compiler die Modekompatibilität der Schnittstellen zum Server überprüft. Bei asynchroner Kommunikation:Mode der Meldung und Mode der Empfangsbufferelemente.
      Bei synchroner Kommunikation:Die Modes der Parameter.
2. Durch die Einführung der Services im Sprachsystem adressiert der Anwender seine Kommunikationspartner auf Hochsprachenniveau, indem er Servicenamen verwendet. Der Compiler bildet aus den Servicenamen dann entsprechende Service-Identifier. Das Betriebssystem kennt schließlich die Service-Identifier und die reale Adresse wie z.B. Prozessornummer oder Bufferadresse.
3. Der Compiler bereitet bereits zum Produktionszeitpunkt die Globale Service-Tabelle vor und definiert den Speicherbereich für die Kommunikationspfade als UBI-Tabellen.

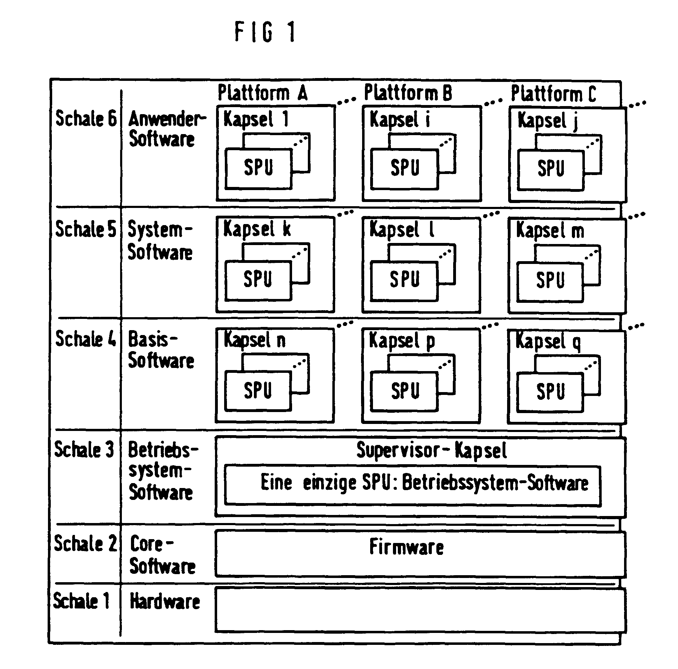

Figur 1 zeigt ein Schalenmodell für Verarbeitungsplattformen eines verteilten Steuerungssystems, das mithilfe des erfindungsgemäßen Programmiersprachensystems realisiert ist. Das Schalenmodell weist folgende Schalen auf:
Eine erste Schale, die der Hardware der betrachteten drei Verarbeitungsplattformen entspricht,
eine zweite Schale, die der Firmware (Urlader, Hardware-Schnittstelle, Fehlererkennung, usw.) der Verarbeitungsplattform entspricht,
eine dritte Schale, die der Betriebssystem-Software (Betriebssystemkern, Fehlerbehandlung) entspricht,
eine vierte Schale, die der Basis-Software (Datenbasis, Überlasteuerung, usw.) der Verarbeitungsplattform entspricht und die mehrere Software-Einheiten sogenannte Kapseln, umfaßt,
eine fünfte Schale, die der System-Software (Recovery-Software, usw.) der Verarbeitungsplattform entspricht und die ebenfalls mehrere Kapseln umfaßt,
eine sechste Schale, die der Anwender-Software (Vermittlungstechnik, Bedienerschnittstelle, Protokollabwicklung, usw.) der Verarbeitungsplattform entspricht und die ebenfalls mehrere Kapseln umfaßt.

Nur die oberhalb der zweiten Schale ablaufende Software wird in Dienstleistungsmodulen SPU und in Kapseln zusammengefaßt. Die Schalen 1 bis 3 stellen zusammen die Grundverarbeitungsplattform dar und sind für jeden Verarbeitungsplattformtyp gleich.

CHILL (CCITT HIgh Level Language) ist eine modulare Programmiersprache mit strengem Typkonzept. CHILL-Programme sind in Module unterteilt, die mittels GRANT ("Export") und SEIZE ("Import") Objekte austauschen. Diese Module werden im folgenden auch als Elementarmodule bezeichnet.

Ein System von Modulen kann zu einem sogenannten Dienstleistungsmodul ("Service Provisioning Unit") zusammengefaßt werden. Das Dienstleistungsmodul stellt dann eine Sichtbarkeitsgrenze für alle von den zusammengefaßten Modulen geGRANTeten Identifiern dar. Dienstleistungsmodule bilden ein in sich relativ abgeschlossenes Software-System; sie gehören stets komplet zu einem abgeschlossenen Adreßraum.

Auch Dienstleistungsmodule tauschen mittels GRANT und SEIZE Objekte aus. Während jedoch gewöhnliche CHILL-Module fast alle auf globaler Ebene definierten Objekte ex- und importieren können (z.B. Variablen, Prozeduren, Konstanten und Modes), dürfen Dienstleistungsmodule nur skalare Konstanten, Modes (Typen) und Services ex-/importieren.

"Services", die im folgenden auch als Dienstinstanzen bezeichnet werden, dienen dazu, gewisse Dienste und Informationen (Prozeduren und Daten) zusammenzufassen und dem Betriebssystem(Operating System OS), genauer gesagt einem globalen Systemverwalter (Service Manager) des Betriebssystems, bekannt zu machen. Wenn ein Dienstleistungsmodul über eine Dienstinstanz einen gewissen Dienst zur Verfügung stellt, den eine andere SPU benötigt, so wird zur Laufzeit dynamisch ein Request an den Service Manager gestellt, den dieser aus den ihm vorliegenden Anbietern befriedigt.

Die Darstellung von Dienstinstanzen in der Programmiersprache CHILL wird weiter unten beschrieben.

Die klassische Kommunikation zweier Software-Einheiten geschieht in der Vermittlungs-Software über das Verschicken von Nachrichten("Messages") an Nachrichtenpuffer ("Buffer"). Solche Puffer, die Nachrichten aufnehmen können, werden in CHILL mit dem Schlüsselwort BUFFER definiert.

Bei der klassischen Buffer-Kommunikation muß zum Senden einer Message die Adresse des Empfangsbuffers bekannt sein. Damit in einem verteilten System jedoch auch Nachrichten zwischen Buffern ausgetauscht werden können, die nicht im selben Adreßraum liegen, müssen sog. "Remote References" definiert werden, die mittels speziellen Supervisor-Aufrufen miteinander kommunizieren.

In CHILL wird eine Remote Reference mittels
<bound remote reference mode> :=
REF <>REMOTE_REFERENCE<> <buffer mode>
definiert.

Eine Remote Reference-Variable wird dann mittels
DCL <name> <bound remote reference mode>;
deklariert.

Mit Hilfe des Betriebssystems wird eine Buffer-Adresse zu einem UBI (Unique Buffer Identifier) vervollständigt und in einer solchen Remote Reference-Location gespeichert.

Innerhalb der Module eines Dienstleistungsmodul kann es Prozeduren geben, deren Dienste auch von anderen SPUs benötigt werden. Um diese Dienste nach außen bekannt zu machen, kann die Prozedur nicht aus dem Dienstleistungsmodul geGRANTet werden (das ist verboten), sondern muß zunächst speziell gekennzeichnet werden:
<name> : PROC ( [<formal parameter list>] )
<>REMOTE_PROCEDURE<> ;

Diese Prozedur muß dann in einen Service eingebettet werden, der an andere Dienstleistungsmodule geGRANTet werden kann.

Ein Remote Procedure Mode ist ein formaler Typ, der dieselben Eigenschaften und Parameter wie eine entsprechende Prozedur hat

Im CHILL-Sinne ist ein Service eine auf SPU-Ebene mittels DCL("DeCLare") deklarierte Variable(Instanz). Der Mode(Typ) dieser Variablen, der im folgenden als Service Mode oder Diensttyp bezeichnet wird, ist entweder von einer anderen SPU geSEIZEt oder in einem Elementarmodul der aktuellen SPU definiert.

Service Modes werden über einen CHILL-STRUCT-Mode definiert und durch eine Compiler-Direktive speziell gekennzeichnet.

Die Komponenten Modes eines Service Modes beinhalten Verwaltungsinformationen für das OS und die eigentlichen "Services", nämlich Remote Reference Modes und Remote Procedure Modes.

Es folgt die Syntax des Service Modes in Chill:

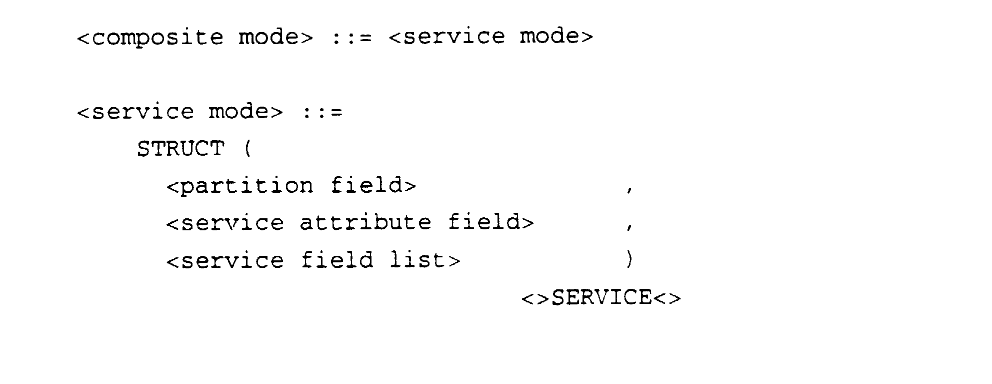

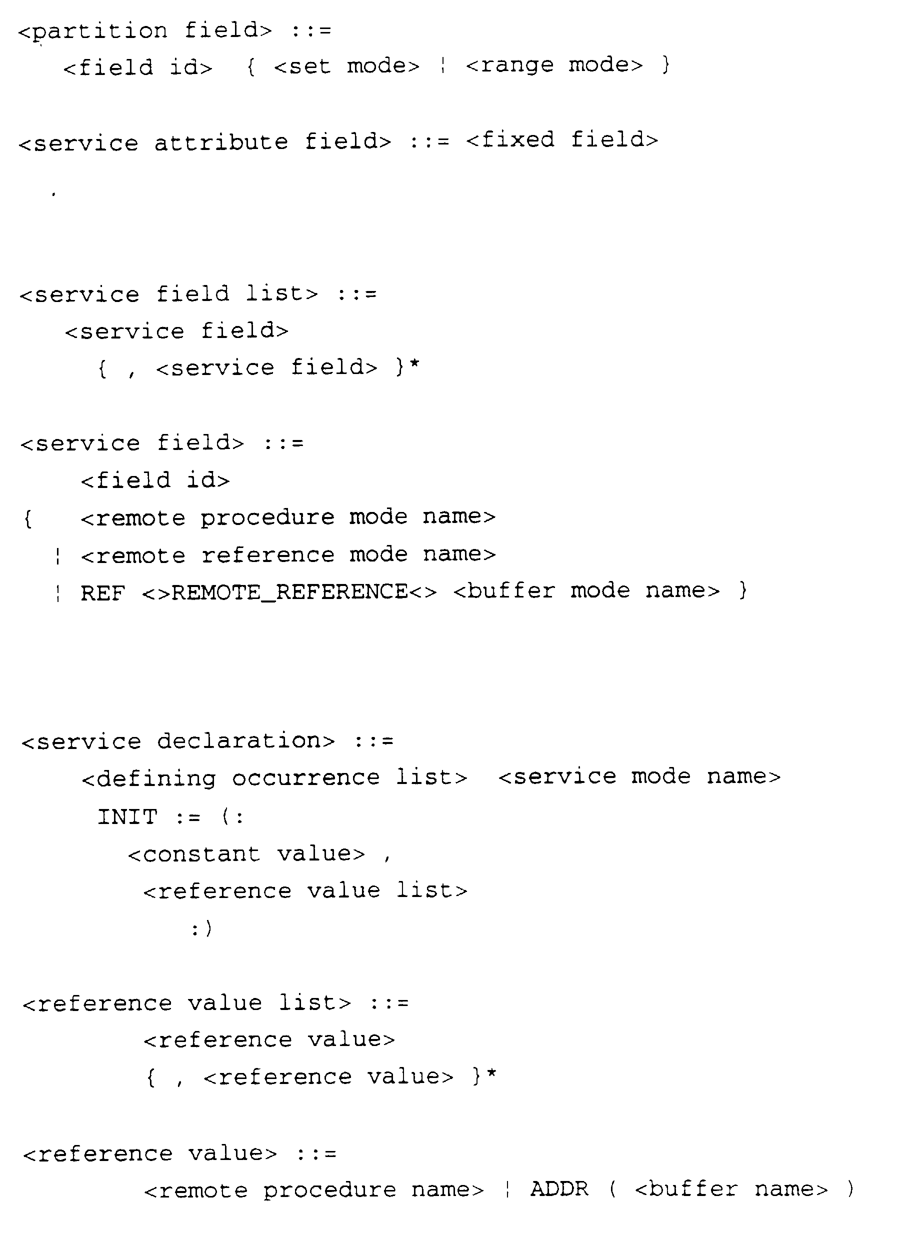

Im folgenden wird die Semantik der Syntax des Service Modes näher erläutert.

Das erste Feld des Service Modes ist das Partition Field und dient der OS-Verwaltung. Sein Mode muß SET oder RANGE of INT sein; es wird vom OS zur Identifikation des Services verwendet.

Auch das zweite Feld, das sogenannte Systemzustandsfeld, dient der OS-Verwaltung. Sein Mode ist ein spezieller Powerset-Mode; es informiert das OS darüber, welche Systemzustande bei der Inanspruchnahme dieser Dienstinstanz zu ignorieren sind.

Danach können beliebig viele (aber mindestens ein) Service Komponenten vom Mode Remote Procedure oder Remote Reference spezifiziert werden.

Die Deklaration der Service-Variablen wird über ein DCL-Statement implementiert, gefolgt von einem statischen INIT. Diese statische Initialisierung ist die einzige Möglichkeit, den Komponenten eines Services Prozeduren oder Buffer zuzuordnen. Eine Zuweisung an Service-Komponenten ist nicht zulässig; Service-Variablen dürfen nur in SVC-Aufrufen verwendet werden.

Die Prozeduren und Buffer, die im statischen INIT an den Service zugewiesen werden, müssen in Elementarmodulen desselben Dienstleistungsmodul definiert worden sein.

Eine Dienstinstanz(initialisierte Service-Variable) wird dem Betriebssystem gegenüber entweder statisch(d.h. zur Produktionszeit des Realzeitsystems) oder dynamisch(d.h. zur Laufzeit des Realzeitsystems) bekanntgemacht.

Während das statische Bekanntmachen vom Konfigurationssystem durchgeführt wird, erfolgt das dynamische Bekanntmachen aufgrund einer expliziten Anweisung(Announce-Anweisung) an das Betriebssystem. Das dynamische Bekanntmachen äußert sich beim Initialisieren einer Dienstinstanz im übrigen dadurch, daß das Partitionsfeld nur mit einem Dummy initialisiert wird.

Ein Code-Beispiel zu dem gesagten in Chill folgt weiter unten.

Ein dynamisch bekanntgemachter Service kann als nicht mehr verfügbar ("withdrawn") gemeldet werden, wenn z.B. der entsprechende Server vom Netz geht.

Das dynamische Bekanntmachen(Announce) und Abmelden(Withdraw) wird in CHILL über zwei Built-In-Routinen realisiert, die direkt in das OS verzweigen und folgende Syntax aufweisen:

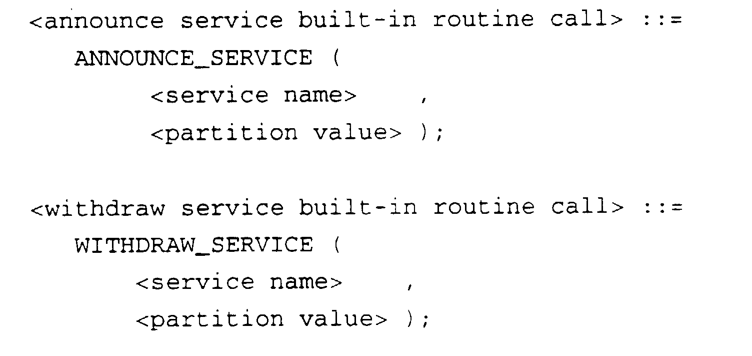

Im folgenden wird die Verbindungsanweisung "CONNECT_SERVICE" näher erläutert.

Wen ein Client einen besonderen Service benötigt, muß er einen sog. Kommunikations-Pfad zwischen ihm und dem Server herstellen. Dieser Server wird über die Partition-Id identifiziert. Anhand der Partition-Id sucht der Service Manager einen verfügbaren Server aus und stellt die Verbindung her.

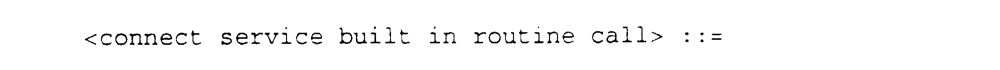

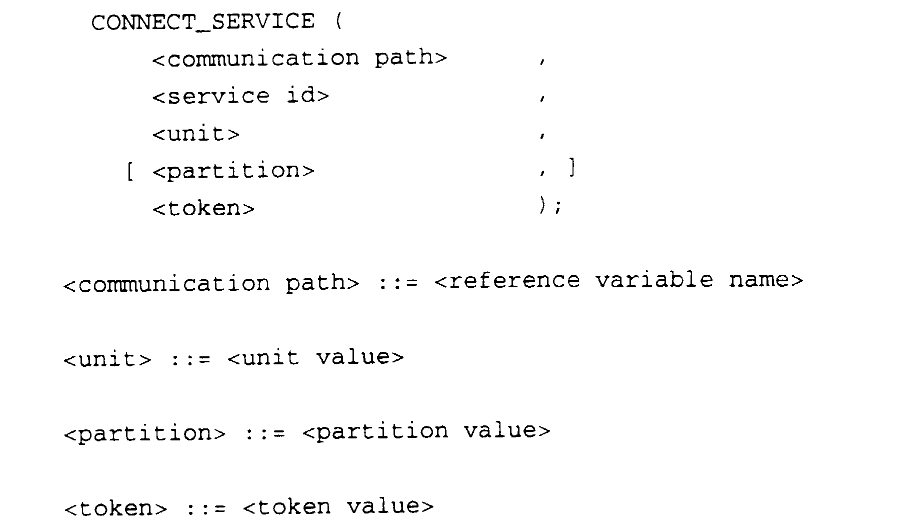

Der wichtigste Parameter ist dabei der <communication path>. Sein Mode ist formal ein REF SERVICE_MODE. Dafür wird im Datenmodul des Client Speicher reserviert, in den der Service Manager die UBIs/Remote Procedures des angeforderten Services schreibt.

Nach einem CONNECT_SERVICE sind dem Client die Komponenten des Service bekannt. Er kann dann über den <communication path> darauf zugreifen und die Remote Prozeduren aufrufen oder Messages an die UBIs schicken.

Im folgeden ist die Syntax eines Aufrufs von CONNECT_SERVICE sowie des anschließenden Aufrufs einer Remote Prozedur (PROC1) und eines Sendens einer Meldung (CAST) dargestellt.

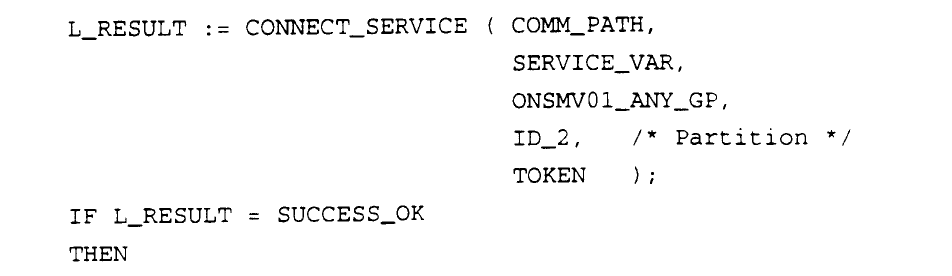

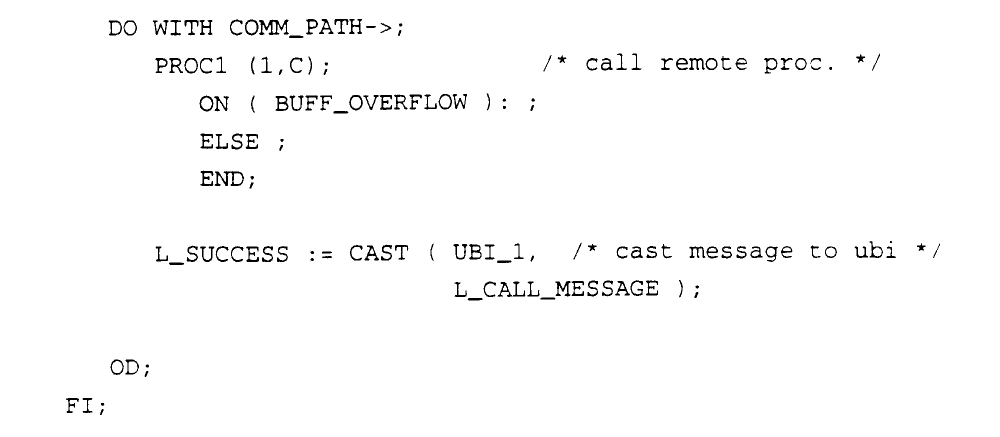

Damit diese Remote-Prozedur-Aufrufe funktionieren, muß im Compiler noch einiges an zusätzlichem Code generiert werden, um den nötigen Support zu liefern. Dies wird im folgenden näher beschrieben.

Wie bereits erläutert sind Remote Prozeduren solche Prozeduren, die von einem Dienstleistungsmodul in einen Service eingeschlossen werden können und auf diesem Weg von anderen Dienstleistungsmoduls verwendbar, d.h."aufrufbar" sind.

Die für den User sichtbaren Sprachmittel vermitteln den Eindruck, daß es sich hierbei wirklich um einen Aufruf im herkömmlichen Sinne handelt.Da jedoch Services auch in andere Adreßräume exportiert werden können, ist klar, daß es sich bei einem Remote Procedure Call (im folgenden RPC genannt) nicht um einen herkömmlichen Prozeduraufruf im klassischen Sinne handeln kann. Vielmehr muß der Compiler bei der Definition einer Remote-Prozedur und beim Aufruf einer Remote-Prozedur-Komponente zusätzlichen Code erzeugen.

Remote Procedure Calls werden über eine generierte CAST-("Sende-") und RECEIVE- ("Empfangs-") Sequenz realisiert. Im Gegensatz zu herkömmlichen Aufrufen ist es nämlich möglich, über den Supervisory Call(SVC) "CAST" und das Sprachmittel "Remote Reference" Nachrichten an Buffer über SPU-Grenzen und sogar Adreßraum-Grenzen hinweg zu schicken, da Remote References systemweit eindeutige Buffer Ids definieren. Dies macht man sich für Remote Procedure Calls zunutze; was also für den Anwender wie ein normaler Prozeduraufruf aussieht, ist in Wirklichkeit ein Versenden von Messages.

Da jede Remote Prozedur potentiell in einen Service eingebettet und von außen verwendet(aufgerufen) werden kann, wird für sie ein Buffer benötigt(der "Stub-Buffer"), der die von den Remote-Aufrufern kommen den Nachrichten empfängt. Dieser Buffer wird bei der Definition einer Remote-Prozedur implizit vom Compiler angelegt.

Ferner wird implizit ein Prozeß generiert (der "Incoming-Stub-Prozeß"), der diesen Buffer ausliest und die Prozedur ruft, sobald eine Message ankommt. Dieser Prozeß liegt in derselben SPU wie die Remote-Prozedur und kann somit die Prozedur aufrufen.

Innerhalb der Deklarationsanweisung DCL einer Service-Variablen werden dem Compiler im statischen INIT die Buffer und Remote Prozeduren bekannt gemacht, die der Service enthalten soll. Sie stammen aus Elementarmodulen desselben Dienstleistungsmodul.

Somit legt der Compiler für jede Servicedeklaration im Datenmodul eines Dienstleistungsmoduls Speicherplatz an, um hier die Adressen der Buffer und Remote Procedures abzulegen. Die Hauptinformation besteht aus Bindesteueranweisungen, d.h. Informationen an den Linker über die hier einzutragenden Buffer und Prozeduren.

Der Compiler muß hierbei folgende Informationen bereitstellen:
1.Falls der Service echt "remote" verwendet wird, muß die Servicevariable im Datenmodul Informationen über alle per
   ADDR (Buffer)
   verwendeten Buffer bereitstellen. Für alle verwendeten Remote-Prozeduren wird an dieser Stelle der zugehörige Stub-Buffer eingetragen. Damit ist die Verbindung Stub-Buffer <-> Remote-Prozedur hergestellt.
2.Aus Optimierungsgründen muß es auch möglich sein, RPCs direkt zu verwenden. Wenn nämlich der Servcie Request aus demselben Adreßraum kommt (und die Adresse der Remote-Prozedur gültig ist), so kann die Prozedur direkt gerufen werden, der Umweg über CAST/RECEIVE mit Hilfe des Stub-Buffers ist nicht nötig. Zu diesem Zweck wird im SPU-Datenmodul die Storesize des Service ein zweites Mal aufgelegt. Hier werden für die Remote-Prozeduren direkt deren Adressen eingetragen.

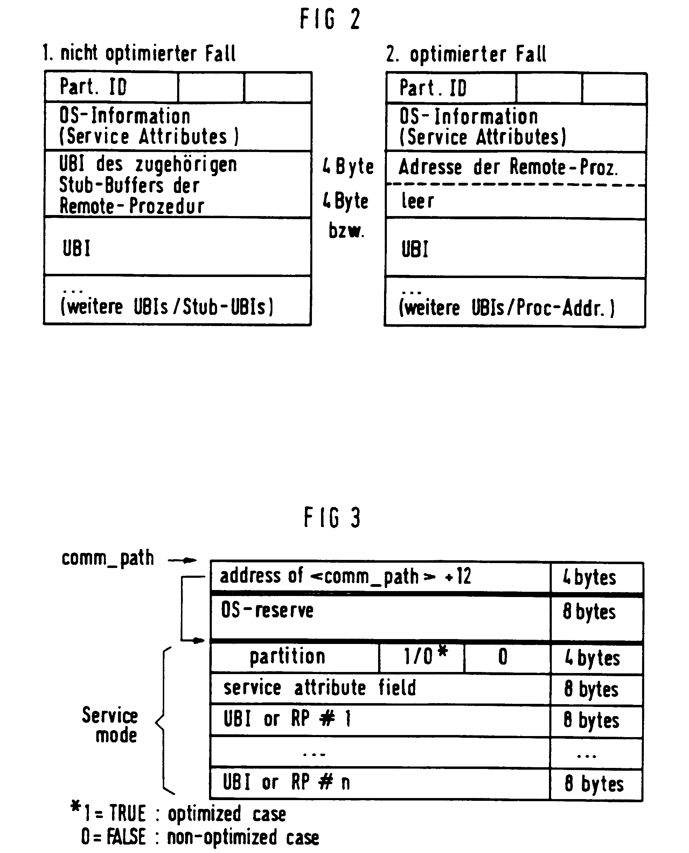

Figur 2 zeigt die im Datenmodul der Server-SPU abgelegten Informationen für die beiden vorher genannten Fälle.

Der Binder (Linker) liest diese im Datenmodul abgelegten Informationen, trägt die absoluten Adressen ein und nimmt diese Servicevariablen in seine Servicetabelle auf. Diese Linker-Servicetabelle wird dann von Online- und Offline-Builder vervollständingt und als Global Service Table (GST) dem Service Manager zur Verfügung gestellt.

Um einen CONNECT_SERVICE zu programmieren, benötigt man einen sog.Communication Path. Formal ist dies eine Variable vom Mode REF SERVICE_MODE. Bei dieser Deklaration reserviert der Compiler Speicher im Datenmodul.

Figur 3 zeigt die Besetzung des Speichers für die Variable comm_path im Datenmodul der Client-SPU. Die Abkürzung "RP" bedeutet dabei "Adresse der Remote Prozedur".

Die Entscheidung darüber, ob ein optimierter oder remote Service Request vorliegt, trifft der Service Manager.

Somit stehen nach dem CONNECT_SERVICE der Anwender-Software die UBIs oder Remote Prozeduren des Service im Datenmodul des Anwenders zur Verfügung. Der Anwender kann dann über
communication_path→. komponente auf die Service-Komponenten zugreifen, d.h. einen CAST an die UBIs codieren oder die Remote Prozeduren rufen(Remote Procedure Call RPC).

Solche in der User-Source codierten RPCs veranlassen den Compiler, eine implizite Prozedur zu generieren (für jeden RPC eine), die als Parameter die Parameter des RPC und den Communication Path erhält. Diese Prozedur heißt Outgoing Stub. Neben ihr wird noch ein Response-Buffer angelegt.

Bei jedem RPC wird zunächst genau dieser Outgoing Stub aufgerufen, in dem anhand der Informationen im Communication Path entschieden wird, ob der Aufruf remote ist oder nicht.

Im optimierten Fall enthält der Communication Path direkt die Prozedur-Adresse; die Prozedur wird direkt gerufen.

Im Remote-Fall verpackt der Stub die RP-Parameter in eine Message(zusammen mit dem UBI seines eigenen Response-Buffers, quasi sein "Absender") und schickt diese an den Stub-Buffer der Remote Procedure (dessen UBI im Communication Path steht).

Wenn die Response-Message ankommt, wird das Resultat des Schickens zusammen mit den Result-Parametern an den Aufrufer zurückgeliefert.

Im folgenden werden die erläuterten Abläufe noch einmal zusammengefaßt und anhand eines Beispiels in CHILL-Sourcecode verdeutlicht.

Wie bereits ausführlicher beschrieben, werden für das Service Addressing folgende Schritte durchlaufen:
1.Der Server deklariert Buffer oder programmiert Remote Prozeduren; für letztere legt der Compiler einen Incoming Stub Prozeß und einen Stub-Buffer an.
2.In dem Dienstleistungsmodul des Servers wird ein Service deklariert. Die darin enthaltenen Buffer, Stub-Buffer und Prozeduradressen werden in den SPU-T-Modul geschrieben und vom Binder/Builder in die Global Service Table aufgenommen.
3.Der Service wird ANNOUNCEt.
4.In der Client-SPU wird der Service geSEIZEt und es wird ein Communication Path definiert, der die Service-Komponenten aufnimmt.
5.Der Anwender des Service ruft den CONNECT_SERVICE auf. Dabei trägt der Service Manager die UBIs/RP-Adressen in den Communication Path ein, je nachdem ob der Service optimiert oder echt "remote" verwendet wird.
6.Der User CASTet eine Message an eine UBI-Komponente oder ruft eine RP-Komponente auf. Beim RPC wird der zugehörige vom Compiler generierte Outgoing Stub aufgerufen.
7.Der Outgoing Stub entscheidet anhand eines Flags im Communication Path, ob die Prozedur direkt zu rufen ist oder ob ein RPC_CAST durchzuführen ist.
8.Im Remote-Fall werden die auch an den Stub übergebenen Parameter für die Remote Prozedur in eine Message verpackt und mittels RPC_CAST an den Ubi des Stub-Buffers der Remote Prozedur geschickt.
9.Der Incoming Stub-Prozeß (der auf CASTs an den Stub-Buffer wartet) empfängt die Message aus dem Stub-Buffer, liest die Parameter aus und ruft die Prozedur direkt.
10.Nach Beendigung der Prozedur verpackt der Stub-Prozeß die Result-Parameter in eine Message und schickt sie an den aufrufenden Outgoing Stub zurück.
11.Der Outgoing Stub empfängt die Result-Message, liest die Parameter aus und übergibt sie an seinen Aufrufer.

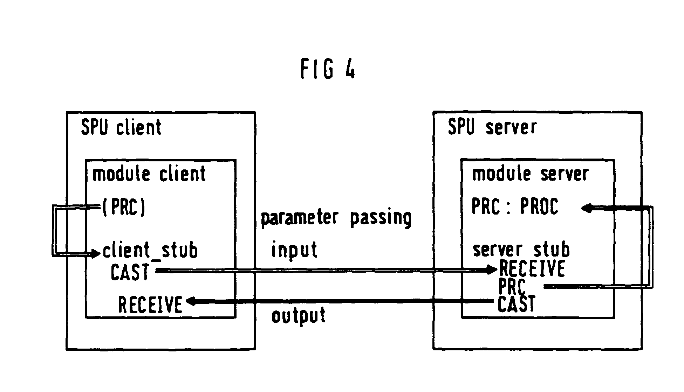

Figur 4 veranschaulicht verkürzt ein im folgenden im CHILL-Code dargestelltes Beispiel des Service Adressing. Die im CHILL-Beispiel auftretenden Abkürzung "OS" bedeutet dabei "Operating System", d.h. Betriebssystem.

Es folgt zunächst der Code für ein einen Dienst anforderndes Dienstleistungsmodul(Client-SPU), sowie die CHILL-mäßige Darstellung desjenigen Codes, der vom Compiler automatisch erzeugt wird.

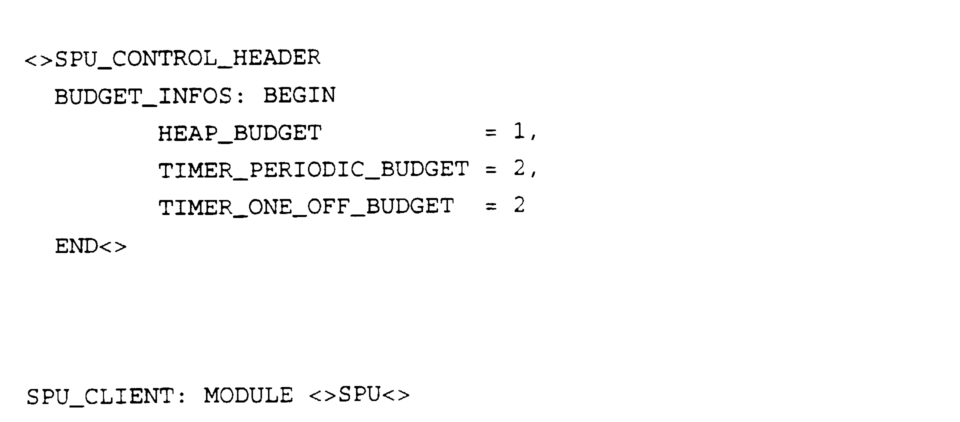

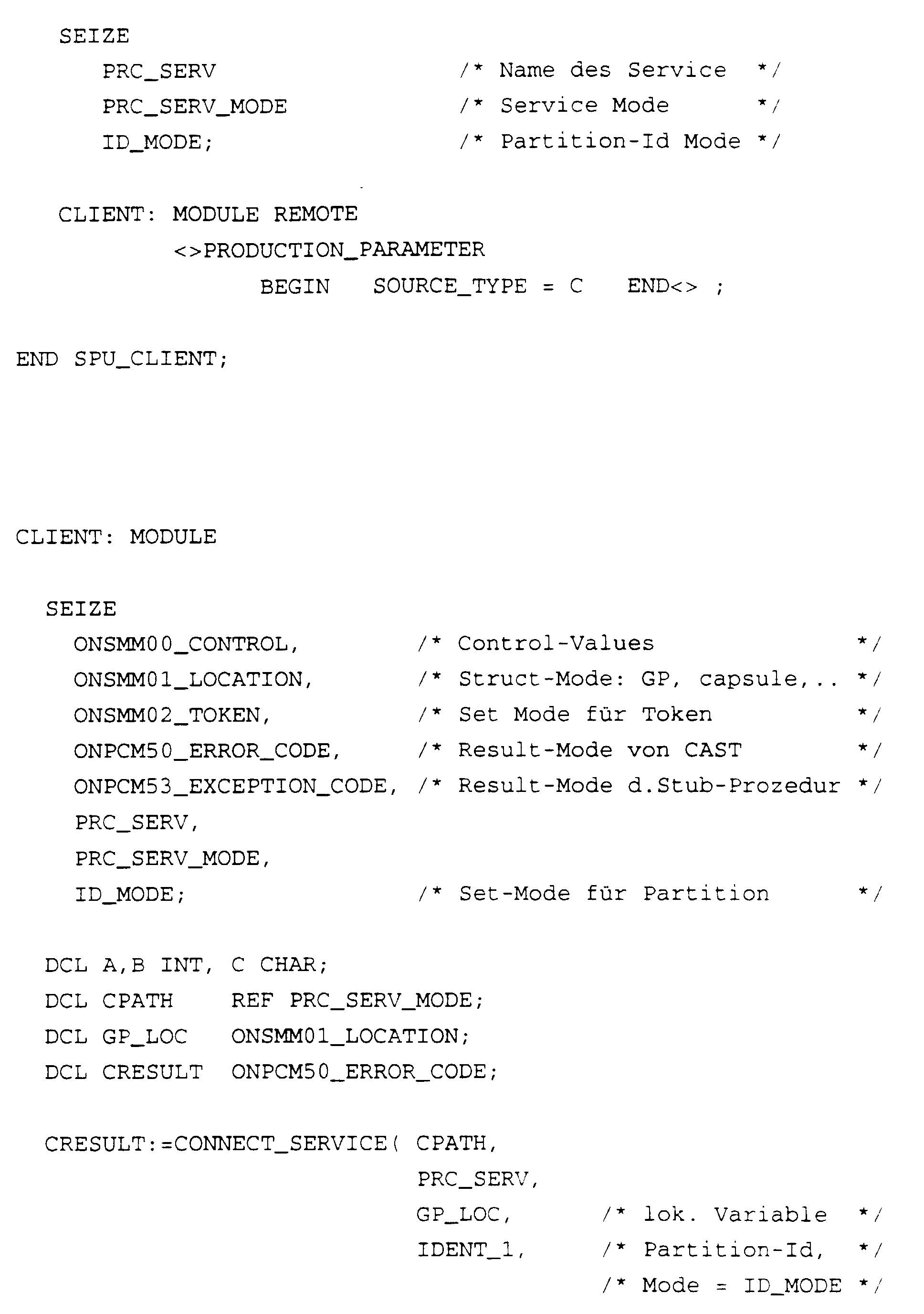

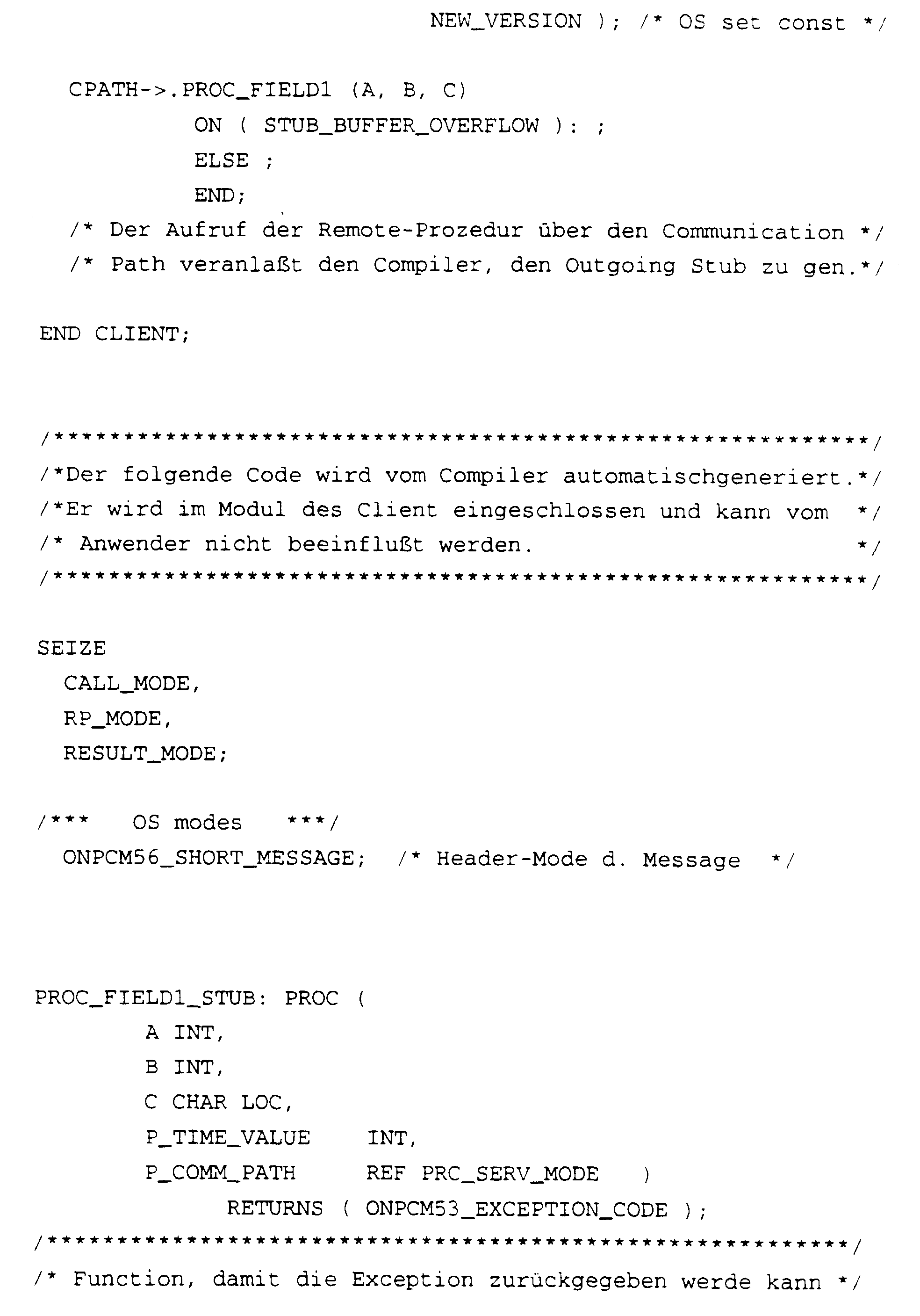

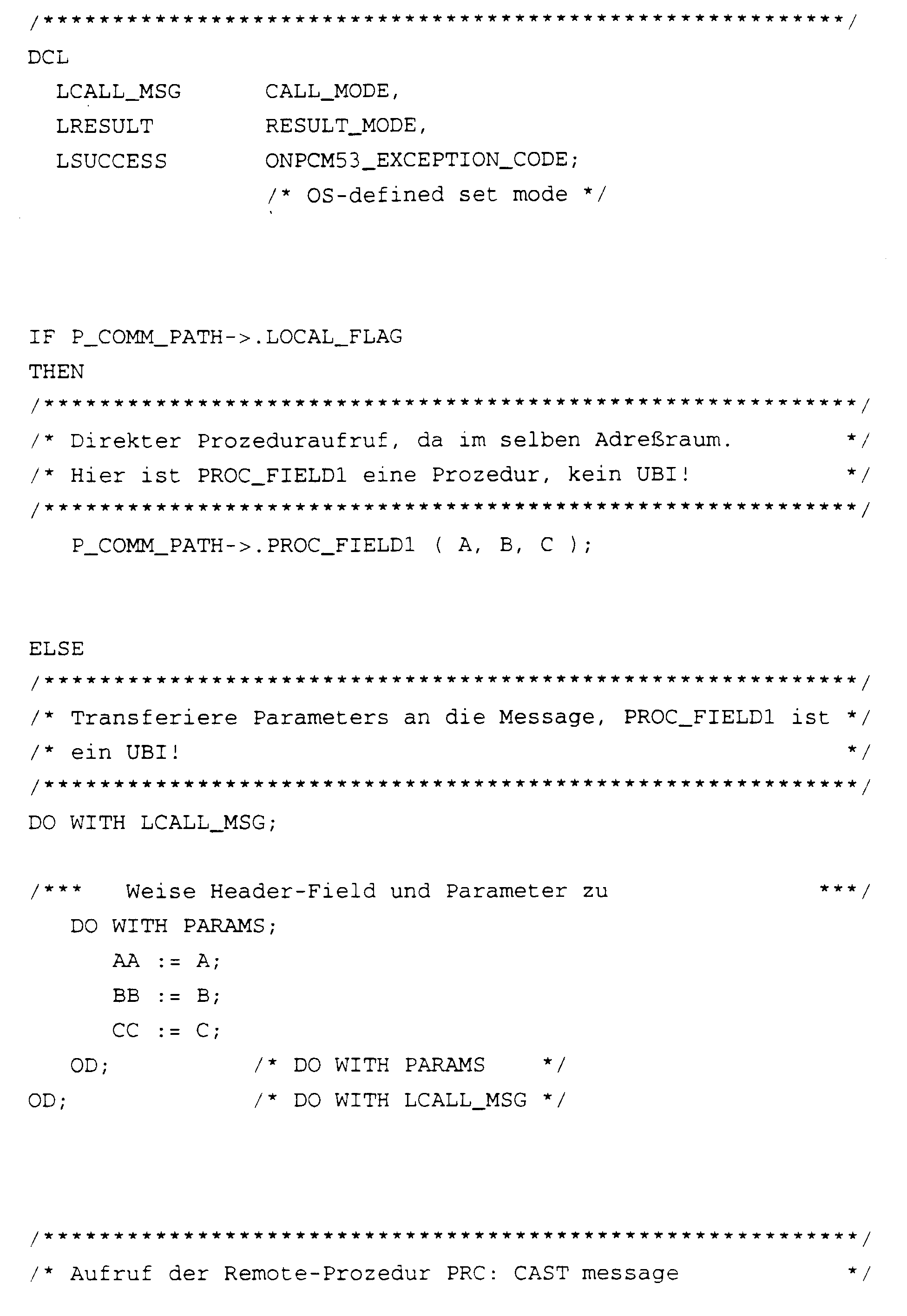

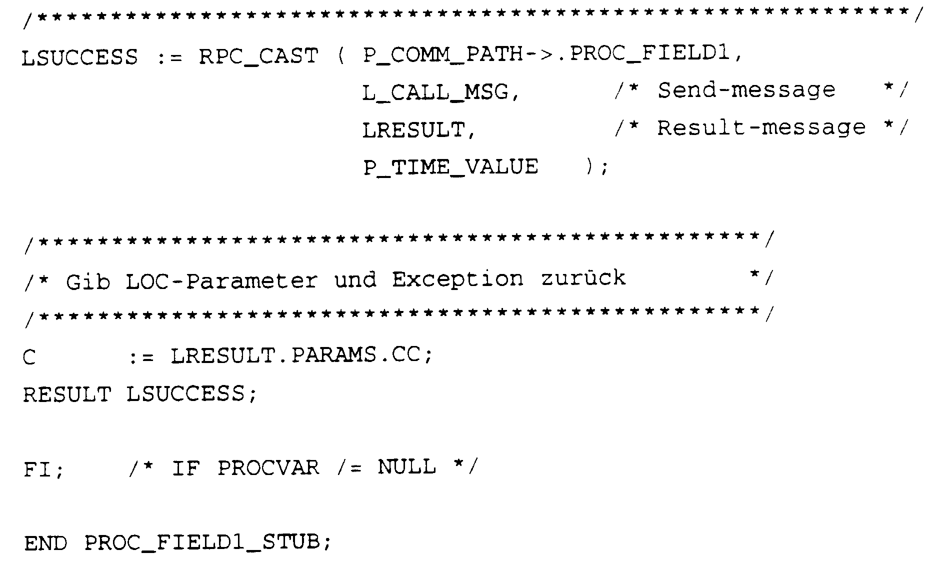

Es folgt nunmehr der Code für das angeforderte Dienstleistungsmodul ( Server-SPU), sowie der automatisch generierte Code für den Incoming Stub.

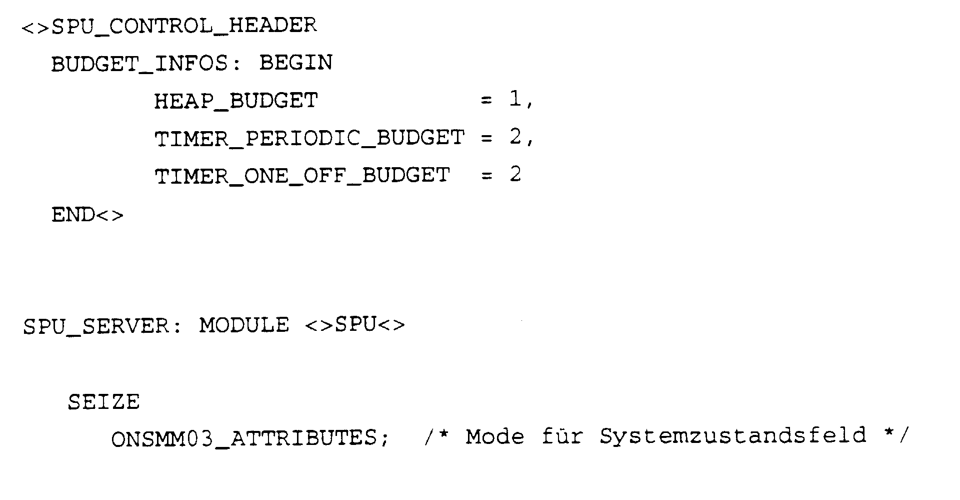

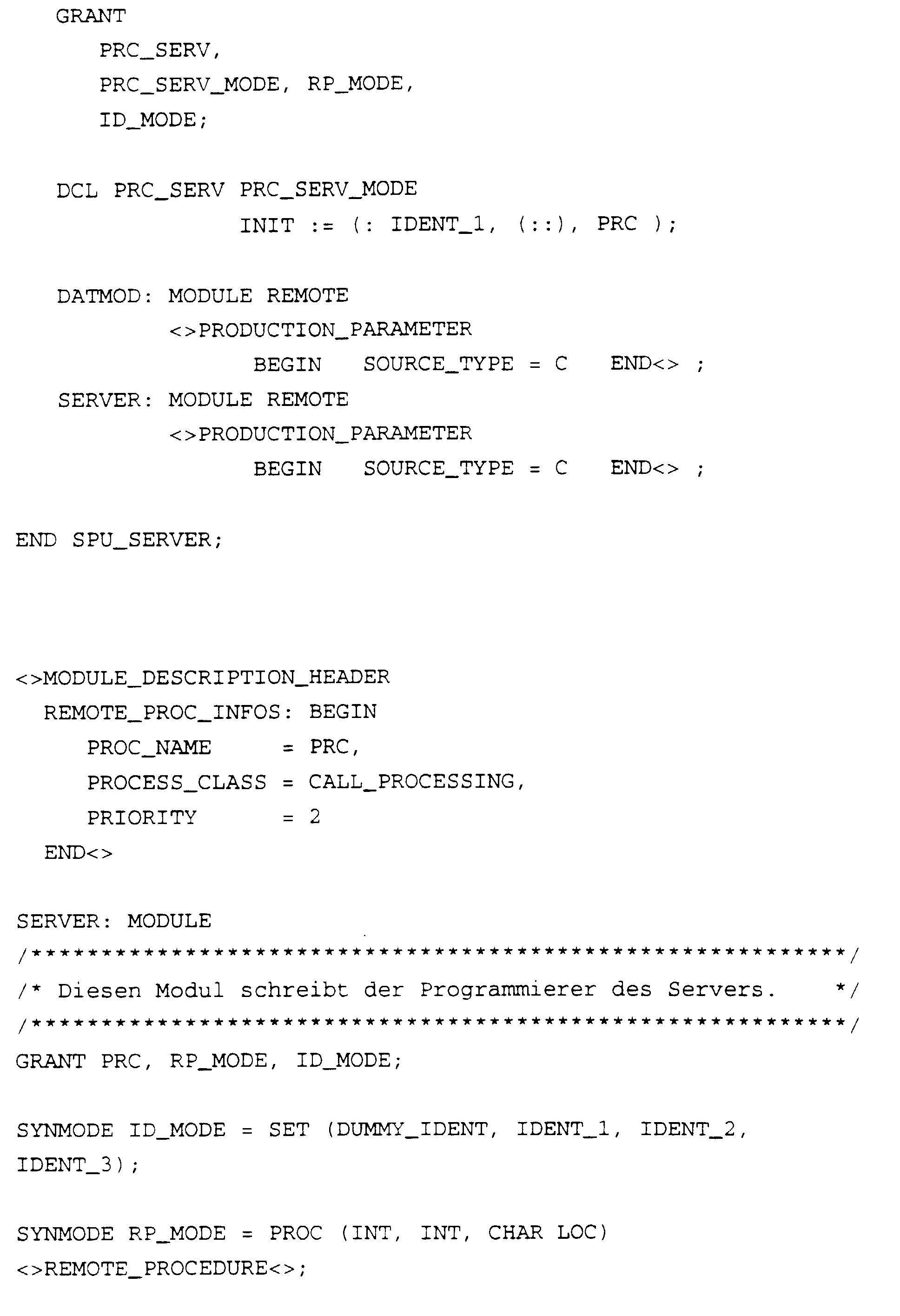

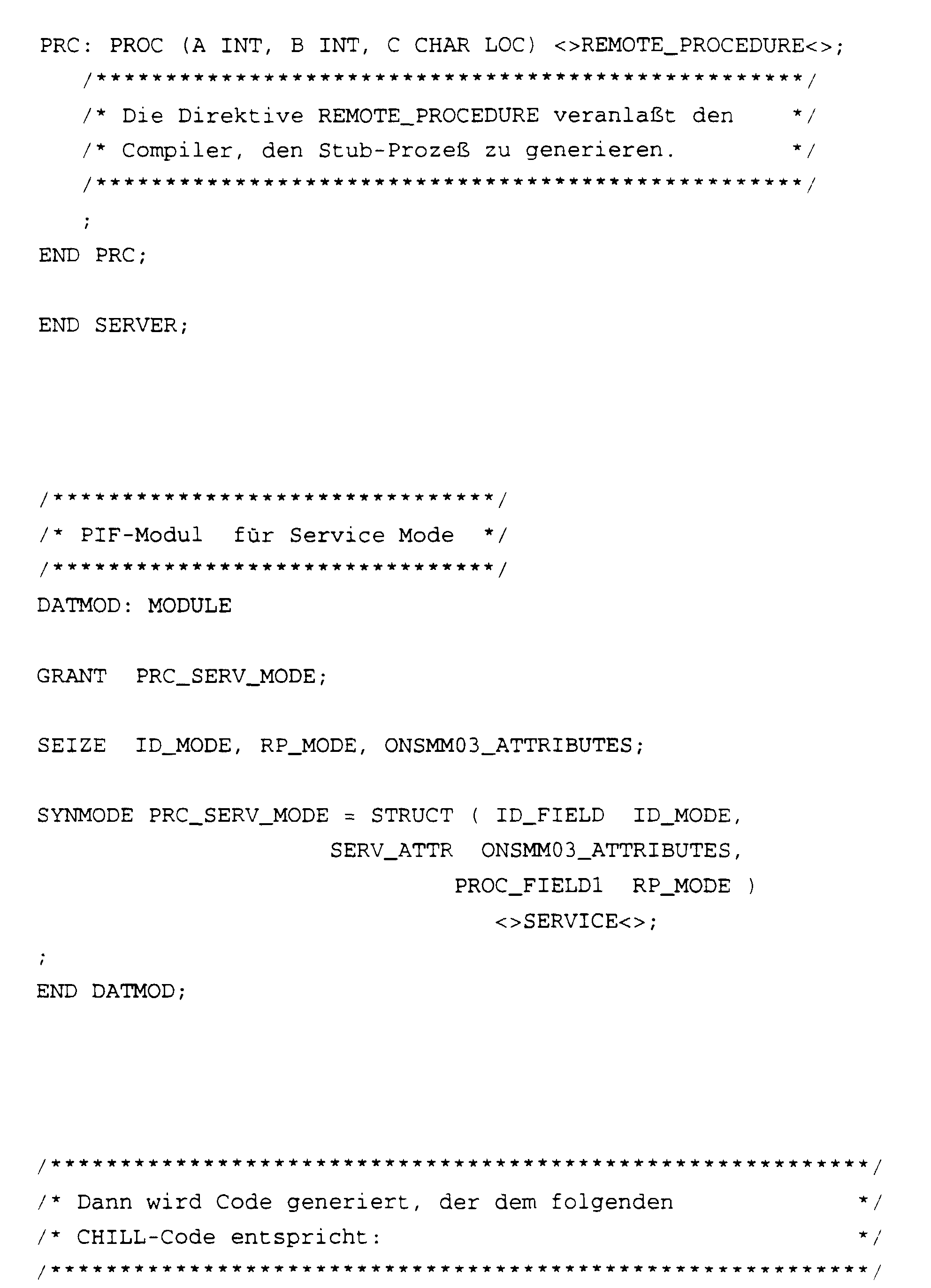

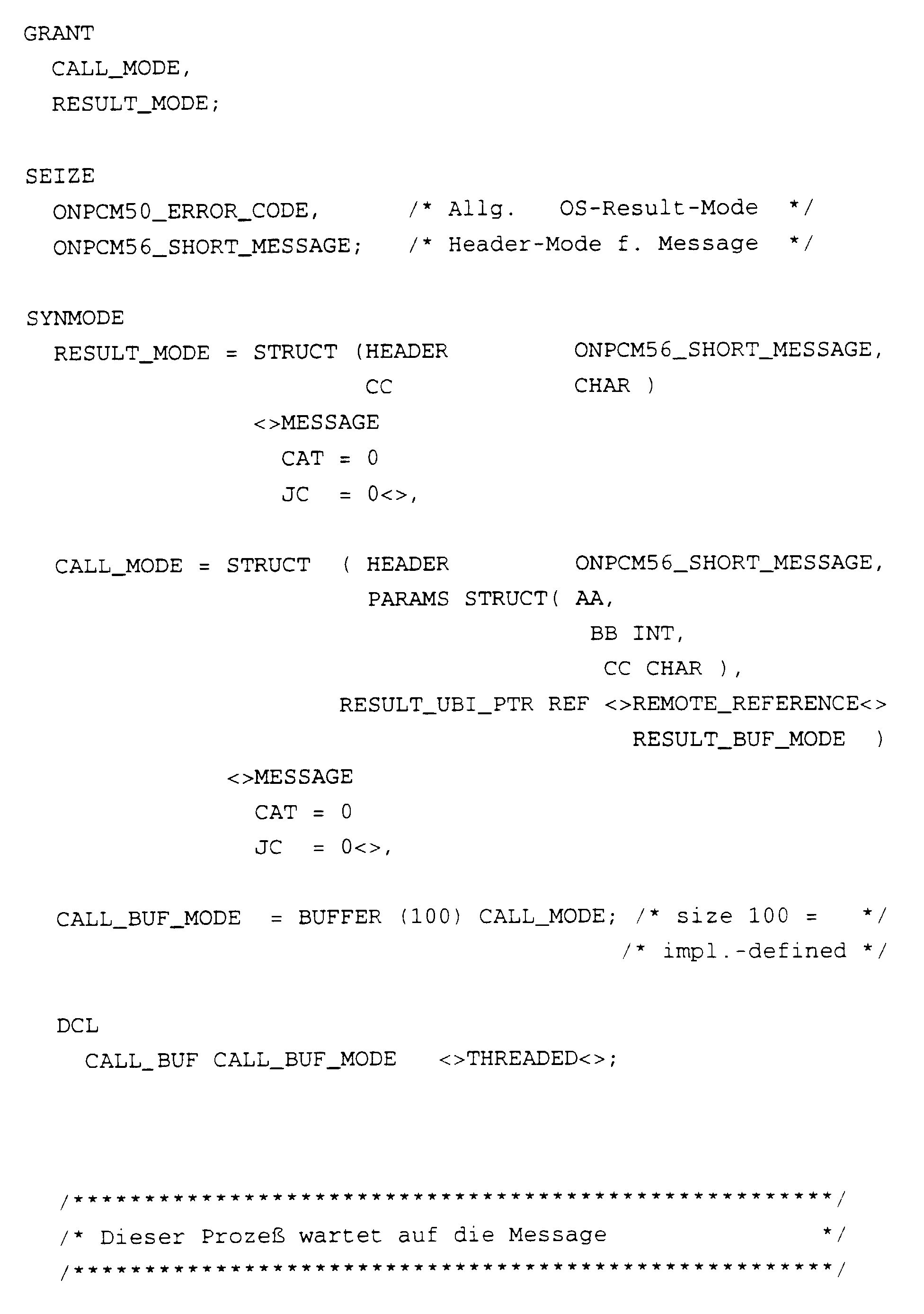

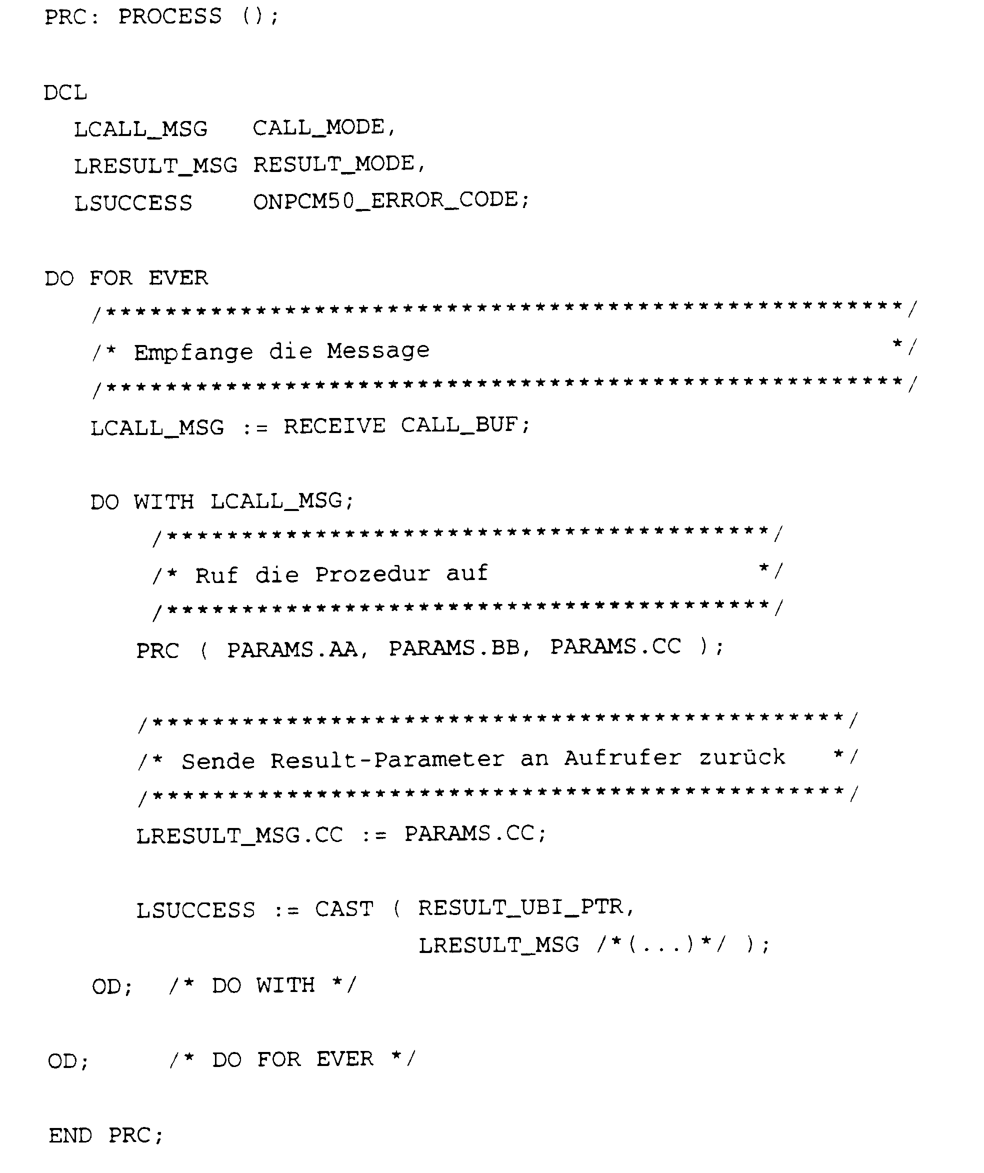

## Patentansprüche

1. Programmiersprachensystem zur Erzeugung eines Programmsystems eines Realzeitsystems auf Hochsprachenniveau mit
a) Modulen zur Modularisierung des Programmsystems, die Prozeduren und Datentypen, sogenannte Objekte, umfassen,
b) einem speziellen Datentyp, dem sogenannten Diensttyp, der eine Kommunikationsschnittstelle beschreibt, die eine oder mehrere Referenz(en) auf die genannten Objekte umfassen kann,
c) einer Deklarationsanweisung zum statischen Erzeugen und Initialisieren einer Instanz des Diensttyps, einer sogenannten Dienstinstanz, die dem Betriebssystem statisch oder dynamisch bekannt gemacht wird,
d) einer Verbindungsanweisung an das Betriebssystem zum dynamischen Einrichten einer Verbindung zu einem Dienst, die dem Betriebssystem als Eingabeparameter eine Wertvariable zur Aufnahme des Namens des angeforderten Dienstes, sowie als Rückgabeparameter eine Referenz-Variable, einen sogenannten Kommunikationspfad, übergibt, unter deren referenzierter Dateninstanz das Betriebssystem die Objektreferenzen einer vom Betriebssystem ausgewählten Dienstinstanz abspeichert,
e) Kommunikationsanweisungen zum Durchführen von Kommunikationen zu Diensten.

2. Programmiersprachensystem nach Anspruch 1,
**dadurch gekennzeichnet,**
daß der Diensttyp ein Partitionsfeld umfaßt, für das in der Verbindungsanweisung ein entsprechender Wert angegeben werden kann, und das dem Betriebssystem eine eindeutige Identifizierung einer Dienstinstanz ermöglicht.

3. Programmiersprachensystem nach Anspruch 2,
**dadurch gekennzeichnet,**
daß das Partitionsfeld einer Dienstinstanz statisch im Rahmen der Deklarationsanweisung belegt werden kann.

4. Programmiersprachensystem nach Anspruch 3,
**dadurch gekennzeichnet,**
daß das Partitionsfeld einer Dienstinstanz durch eine spezielle Anweisung dynamisch belegt werden kann und der Verfügbarkeitsbereich dieser Dienst instanz damit dynamisch veränderbar ist.

5. Programmiersprachensystem nach einem der Ansprüche 1 - 4,
**dadurch gekennzeichnet,**
daß der Diensttyp ein Versionskennzeichenfeld(Token) umfaßt, über welches eine Dienstinstanz dem Betriebssystem anzeigt, welche Version der über diese Dienstinstanz zugängliche Dienst aufweist.

6. Programmiersprachensystem nach einem der Ansprüche 1 - 5,
**dadurch gekennzeichnet,**
daß der Diensttyp ein Systemzustandsfeld umfaßt, über welches eine Dienstinstanz das Betriebssystem anweisen kann, bei einer Anforderung eines Dienstes über diese Dienstinstanz bestimmte Systemzustände (Lastzustand, Betriebszustand) hinsichtlich der Durchführung dieser Anforderung zu ignorieren.

7. Programmiersprachensystem nach einem der Ansprüche 1 - 6,
**gekennzeichnet durch**
ein Dienstsleistungsmodul (SPU), das als externe Objekte nur Dienstschnittstellen exportieren kann.

8. Programmiersprachensystem nach einem der Ansprüche 1 - 7,
**dadurch gekennzeichnet,**
daß
a) eine der Kommunikationsanweisungen zur Durchführung der Kommunikation zu einem Dienst ein Remote-Prozedur-Aufruf ist,
b) das Programmiersprachensystem bei der Übersetzung des Remote-Prozedur-Aufrufs eine Sendeprozedur erzeugt, die als Parameter eine Prozedur-Objektreferenz umfaßt,
c) die Sendeprozedur anhand des Wertes der genannten Prozedur-Objektreferenz entscheidet, ob der Remote-Prozedur-Aufruf echt Remote oder nicht Remote, d.h. lokal, ist,
d) die Sendeprozedur im Falle eines Remote-Prozedur-Aufrufs, der echt Remote ist, die Parameter des Remote-Prozedur-Aufrufs in eine Nachricht verpackt und diese an den Empfangspuffer der zugehörigen Remote-Prozedur sendet,
e) die Sendeprozedur im Falle eines lokalen Remote-Prozedur-Aufrufs die aufgerufene lokale Prozedur unter Angabe des Wertes der Prozedur-Objektreferenz direkt aufruft.

## Claims

1. High-level programming language system for generating a program system of a real-time system, having
a) modules to modularize the program system, which modules comprise procedures and data types, so-called objects,
b) a special data type, a so-called service type, which describes a communications interface which may comprise one or more reference(s) to the said objects,
c) a declaration instruction for the static generation and initialization of an instance of the service type, a so-called service instance, which is announced to the operating system statically or dynamically,
d) a connection instruction to the operating system for the dynamic setting-up of a connection to a service, which instruction transmits to the operating system, as input parameter, a value variable to accommodate the name of the service requested and, as return parameter, a reference variable, a so-called communication path, under whose referenced data instance the operating system stores the object references of a service instance selected by the operating system,
e) communications instructions for carrying out communications to services.

2. Programming language system according to Claim 1, characterized in that the service type comprises a partition field, for which a corresponding value can be specified in the connection instruction, and which enables the operating system to make a unique identification of a service instance.

3. Programming language system according to Claim 2, characterized in that the partition field of a service instance can be reserved statically in the context of the declaration instruction.

4. Programming language system according to Claim 3, characterized in that the partition field of a service instance can be reserved dynamically by a special instruction, and the availability range of this service instance can therefore be varied dynamically.

5. Programming language system according to one of Claims 1 - 4, characterized in that the service type comprises a version identifier field (token), via which a service instance indicates to the operating system which version the service that is accessible via this service instance has.

6. Programming language system according to one of Claims 1 - 5, characterized in that the service type comprises a system state field, via which a service instance can advise the operating system, when a service is requested via this service instance, to ignore specific system states (load state, operating state) with respect to carrying out this request.

7. Programming language system according to one of Claims 1 - 6, characterized by a service provisioning unit (SPU), which can export only service interfaces as external objects.

8. Programming language system according to one of Claims 1 - 7, characterized in that
a) one of the communications instructions for carrying out the communication with a service is a remote procedure call,
b) the programming language system, when translating the remote procedure call, generates a sending procedure which comprises a procedure object reference as parameter,
c) the sending procedure, using the value of the said procedure object reference, decides whether the remote procedure call is truly remote or not remote, i.e. local,
d) the sending procedure, in the event of a remote procedure call that is truly remote, packs the parameter of the remote procedure call into a message and sends this to the receive buffer of the associated remote procedure,
e) the sending procedure, in the event of a local remote procedure call, calls the called local procedure directly, whilst specifying the value of the procedure object reference.

## Revendications

1. Système de langage de programmation pour la production d'un système de programme d'un système en temps réel en langage évolué, comportant
a) des modules qui sont destinés à modulariser le système de programme et qui comprennent des procédures et des types de données, appelés objets,
b) un type de données spécial, appelé type Service, qui décrit une interface de communication qui peut comprendre une ou plusieurs références auxdits objets,
c) une instruction de déclaration destinée à la production statique et à l'initialisation d'une instance du type Service, appelée instance de service, qui est déclarée au système d'exploitation de manière statique ou dynamique,
d) une instruction de liaison vers le système d'exploitation qui est destinée à l'établissement dynamique d'une liaison vers un service et qui transmet au système d'exploitation comme paramètre d'entrée une variable de valeur pour la réception du nom du service demandé, ainsi que comme paramètre de retour une variable de référence, appelée chemin de communication, dont l'instance de données référencée sert au système d'exploitation pour mémoriser les références d'objets d'une instance de service sélectionnée par le système d'exploitation,
e) des instructions de communication qui sont destinées à la mise en oeuvre de communications vers des services.

2. Système de langage de programmation selon la revendication 1,
caractérisé par le fait que
le type Service comprend un champ de partition pour lequel une valeur appropriée peut être donnée dans l'instruction de liaison et qui permet au système d'exploitation une identification univoque d'une instance de service.

3. Système de langage de programmation selon la revendication 2,
caractérisé par le fait que
le champ de partition d'une instance de service peut être affecté de manière statique dans le cadre de l'instruction de déclaration.

4. Système de langage de programmation selon la revendication 3,
caractérisé par le fait que
le champ de partition d'une instance de service peut être affecté de manière dynamique par une instruction spéciale et que le domaine de disponibilité de cette instance de service peut donc être modifié de façon dynamique.

5. Système de langage de programmation selon l'une des revendications 1 à 4,
caractérisé par le fait que
le type Service comprend un champ de numéro de version (Token) par l'intermédiaire duquel une instance de service indique au système d'exploitation quelle est la version du service accessible par cette instance de service.

6. Système de langage de programmation selon l'une des revendications 1 à 5,
caractérisé par le fait que
le type Service comprend un champ d'état de système par l'intermédiaire duquel une instance de service peut indiquer au système d'exploitation, lors d'une demande d'un service par l'intermédiaire de cette instance de service, d'ignorer certains états de système (état de charge, état de fonctionnement) en vue de l'exécution de cette demande.

7. Système de langage de programmation selon l'une des revendications 1 à 6,
caractérisé par
un module d'offre de service (SPU) qui ne peut exporter comme objets externes que des interfaces de services.

8. Système de langage de programmation selon l'une des revendications 1 à 7,
caractérisé par le fait que
a) une des instructions de communication pour la mise en oeuvre de la communication vers un service est un appel de procédure distante (Remote Procedure),
b) le système de langage de programmation produit lors de la traduction de l'appel de procédure distante une procédure d'émission qui comprend comme paramètre une référence d'objet procédure,
c) la procédure d'émission'décide à l'aide de la valeur de la référence d'objet procédure si l'appel de procédure distante est vraiment distant (remote) ou non, c'est-à-dire local,
d) la procédure d'émission, dans le cas d'un appel de procédure distante qui est vraiment distant, met en paquet les paramètres de l'appel de procédure distante dans une information et envoie celle-ci au tampon de réception de la procédure distante associée,
e) la procédure d'émission, dans le cas d'un appel local de procédure distante-, appelle directement la procédure locale appelée en donnant la valeur de la référence d'objet procédure.
